# EUROPEAN PATENT APPLICATION

(11) **EP 4 741 640 A1**
(43) Date of publication of application: **13.05.2026**
(21) Application number: 24211259.7
(22) Date of filing: 06.11.2024
(51) Int. Cl.: F01M 1/08, F01M 1/16, F16K 5/04, F16K 31/04, F16N 27/02

(54) **VALVE SYSTEM**

(71) Applicant: VOLVO TRUCK CORPORATION, 405 08 Göteborg (SE)
(72) Inventor: Michael, WEAVER, Fairplay, MD 21733 (US)
(74) Representative: Germain Maureau

(57) **Abstract**

A valve system (10) including a first valve body (20) defining an outlet (24) configured to distribute a fluid; a second valve body (22) configured to be received within the first valve body and to be transitioned between at least a first position corresponding to a fully-open state of the valve system and a second position corresponding to a closed state of the valve system; a motor (40) configured to transition the second valve body between the first position and the second position by rotating a shaft (42) about an axis of rotation (A-R) in a series of angular steps; and a control unit (60) configured to operate the motor to transition the second valve body between the first position and the second position.

## Description

### TECHNICAL FIELD

The disclosure relates generally to a system for cooling and/or lubricating one or more part of a mechanical device. In particular aspects, the disclosure relates to a piston cooling jet system configured for use on a vehicle to cool and/or lubricate one or more part of an engine of a vehicle. The disclosure may relate to heavy-duty vehicles, such as trucks, buses, and/or construction equipment, among other vehicle types. However, although the disclosure may be described with respect to a particular vehicle, the disclosure is not restricted to any particular vehicle.

### BACKGROUND

An internal combustion engine and/or hybrid internal combustion engine of a vehicle typically includes an engine block defining one or more cylinder configured for reciprocation of a piston. Friction caused by contacting surfaces of the piston and the cylinder during reciprocation of the piston generates heat and produces wear on the piston and the cylinder, resulting in diminished mechanical efficiency and, eventually, mechanical failure, such as a piston seizure.

A piston cooling jet in communication with a supply of a lubricant, such as oil, may be employed to apply the lubricant to the piston to absorb heat and reduce friction corresponding to the piston and the cylinder. The supply of lubricant to the piston cooling jet may be regulated by use of a valve in communication with the piston cooling jet. In particular, a solenoid valve, which is configured to use electromagnetism to open and/or close a port in communication with the piston cooling jet, is commonly used to regulate supply of lubricant to the piston cooling jet.

However, pressure and flow control of lubricant through a solenoid valve is typically varied and inaccurate due at least in part to reliance on sensitivity to fluctuations in voltage. Further, a position and/or state of a solenoid valve is typically unknown and/or unable to be fixed. Accordingly, use of a solenoid valve may lead to unnecessary and/or insufficient supply of lubricant to the piston cooling jet and, thus, to the piston. Additionally, a solenoid valve typically does not have sufficient strength and/or robustness to overcome debris that may be found in the lubricant. As such, use of a solenoid valve to regulate supply of lubricant to the piston cooling jet may result in inefficient lubricant consumption and/or premature mechanical failure of the piston.

It is desirable to provide a valve system configured for use on a vehicle having increased valve control, accuracy, and strength to thereby enhance mechanical efficiency and prevent mechanical failure of a piston in an engine of a vehicle.

### SUMMARY

According to aspects of the disclosure, a valve system configured for use in a lubrication system of a vehicle is provided. The valve system includes a first valve body defining an outlet configured to distribute a fluid. The valve system includes a second valve body configured to be received within the first valve body and to be transitioned between at least a first position corresponding to a fully-open state of the valve system and a second position corresponding to a closed state of the valve system. The valve system includes a motor configured to transition the second valve body between the first position and the second position by rotating a shaft about an axis of rotation in a series of angular steps. The valve system includes a control unit configured to operate the motor to transition the second valve body between the first position and the second position.

According to aspects of the disclosure, the control unit may be configured to prompt a plurality of pulses of electric current to be transmitted to the motor by an electric power source.

According to aspects of the disclosure, each step in the series of steps of the motor may correspond to a pulse of the plurality of pulses transmitted to the motor by the electric power source.

According to aspects of the disclosure, the motor may be configured to include between 6 and 400 steps per full rotation of the shaft.

According to aspects of the disclosure, the motor may include a stator and a rotor surrounded by the stator.

According to aspects of the disclosure, the valve system may include a gear train configured to receive rotational force imparted by the shaft and to impart rotational force on the second valve body to transition the second valve body between the first position and the second position.

According to aspects of the disclosure, the gear train may include a central gear configured to be rotated by the shaft, a plurality of peripheral gears configured to mesh with the central gear and to revolve about the central gear, and an outer ring gear configured to mesh with the plurality of peripheral gears about the central gear.

According to aspects of the disclosure, the outer ring gear may be coupled to at least a portion of the second valve body.

According to aspects of the disclosure, the valve system may include a bias member configured to bias the second valve body toward the first position.

According to aspects of the disclosure, a lubrication system configured for use on a vehicle is provided. The lubrication system includes a reservoir configured to store a supply of a fluid, an injection member configured to receive the fluid and to apply the fluid toward a piston of an engine of a vehicle, and the valve system according to any aspect of the disclosure presented herein.

According to aspects of the disclosure, the valve system may be configured to control a flow of the fluid between the reservoir and the injection member.

According to aspects of the disclosure, the injection member may be capable of applying the fluid toward the piston when the valve system is in the fully-open state and the injection member may no longer be capable of applying the fluid toward the piston when the valve system is in the closed state.

According to aspects of the disclosure, the control unit may be configured to prompt an electric power source to transmit a plurality of pulses of electric current to the motor.

According to aspects of the disclosure, each pulse of the plurality of pulses may correspond to a step of the series of steps of the motor.

According to aspects of the disclosure, a method of controlling a flow of a fluid in a lubrication system of a vehicle is provided. The method includes providing the valve system according to any aspect of the disclosure presented herein and rotating the shaft of the motor about the axis of rotation in the series of angular steps to transition the second valve body between the first position and the second position.

According to aspects of the disclosure, rotating the shaft may include between 6 and 400 steps per full rotation of the shaft.

According to aspects of the disclosure, the method may include transmitting a plurality of pulses of electric current to the motor.

According to aspects of the disclosure, the method may include imparting rotational force on a gear train to transition the second valve body between the first position and the second position.

According to aspects of the disclosure, imparting rotational force on the gear train may include rotating a central gear with the shaft, meshing a plurality of peripheral gears with the central gear, and meshing an outer ring gear with the plurality of peripheral gears about the central gear.

According to aspects of the disclosure, the method may include compressing a bias member to transition the second valve body between the first position and the second position.

According to aspects of the disclosure, a vehicle including the valve system according to any aspect of the disclosure presented herein is provided.

In the manner described and according to aspects illustrated herein, the valve system, the lubrication system, the method of controlling a flow of a fluid, and the vehicle are configured to increase valve control, accuracy, and strength to thereby enhance mechanical efficiency and prevent mechanical failure of a piston in an engine of a vehicle.

The disclosed aspects, examples (including any preferred examples), and/or accompanying claims may be suitably combined with each other as would be apparent to a person having ordinary skill in the art. Additional features and advantages are disclosed in the following description, claims, and drawings, and in part will be readily apparent therefrom to persons skilled in the art and/or recognized by practicing the disclosure as described herein.

### BRIEF DESCRIPTION OF THE DRAWINGS

Aspects of the disclosure will be described with reference to the drawings, where like numerals reflect like elements:
**FIG. 1** shows a side perspective view of a vehicle according to aspects of the disclosure;
**FIG. 2** shows a side perspective view of an engine block of the vehicle of **FIG. 1** according to aspects of the disclosure;
**FIG. 3** shows a front cross-sectional view of a combustion chamber of the engine block of **FIG. 2** according to aspects of the disclosure;
**FIG. 4** shows a schematic view of a lubrication system of the vehicle of **FIG. 1** according to aspects of the disclosure;
**FIG. 5** shows a cross-sectional view of a valve system of the lubrication system of **FIG. 4** according to aspects of the disclosure;
**FIG. 6A** shows a front perspective view of a first valve body and a second valve body of the valve system of **FIG. 5**, depicting the valve system in a fully-open state according to aspects of the disclosure;
**FIG. 6B** shows a front perspective view of the first valve body and the second valve body of the valve system of **FIG. 5**, depicting the valve system in a partially-open state according to aspects of the disclosure;
**FIG. 6C** shows a front perspective view of the first valve body and the second valve body of the valve system of **FIG. 5**, depicting the valve system in a closed state according to aspects of the disclosure;
**FIG. 7** shows a side partial cross-sectional view of a motor of the valve system of **FIG. 5** according to aspects of the disclosure;
**FIG. 8** shows a front perspective view of a gear train of the valve system of **FIG. 5** according to aspects of the disclosure; and
**FIG. 9** shows a schematic diagram of the valve system of **FIG. 5** according to aspects of the disclosure.

### DETAILED DESCRIPTION

The detailed description set forth below provides information and examples with sufficient detail to enable those skilled in the art to practice the disclosure.

In the description, like numerals represent like parts. Although the technology disclosed herein is described with reference to specific examples, it should be understood that modifications and changes may be made to these examples without going beyond the general scope as defined by the claims. In particular, individual characteristics of the various examples shown and/or mentioned herein may be combined in additional examples. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to a particular example described. On the contrary, the intention of this disclosure is to cover all modifications, equivalents, and alternatives falling within the scope of the disclosure.

Various materials, methods of construction, methods of fastening, and the like may be described in the context of disclosed examples. Those skilled in the art will recognize known substitutes for the materials, construction methods, fastening methods, and the like, all of which are contemplated as compatible with the disclosed example and are intended to be encompassed by the appended claims.

As used in this disclosure and the appended claims, the singular forms "a," "an," and "the" include plural referents, unless the content clearly dictates otherwise. As used in this disclosure and the appended claims, the term "or" is generally employed in a sense including "and/or," unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims, should be understood as including its end value(s), unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like manner (e.g., "between" versus "directly between," "adjacent" versus "directly adjacent," etc.).

Spatially relative terms, such as "top," "bottom," "middle," "inner," "outer," "beneath," "below," "lower," "above," "upper," and the like may be used herein for ease of description to describe one element or relationship of a feature to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," "third," etc. may be used herein to describe various elements, components, regions, layers, sections, and/or parameters, these elements, components, regions, layers, sections, and/or parameters should not be limited by these terms. These terms are only used to distinguish one element, component, region, layer, section, or parameter from another element, component, region, layer, section, or parameter. Thus, a first element, component, region, layer, section, or parameter discussed herein could be termed a second element, component, region, layer, section, or parameter without departing from the teachings of the present disclosure.

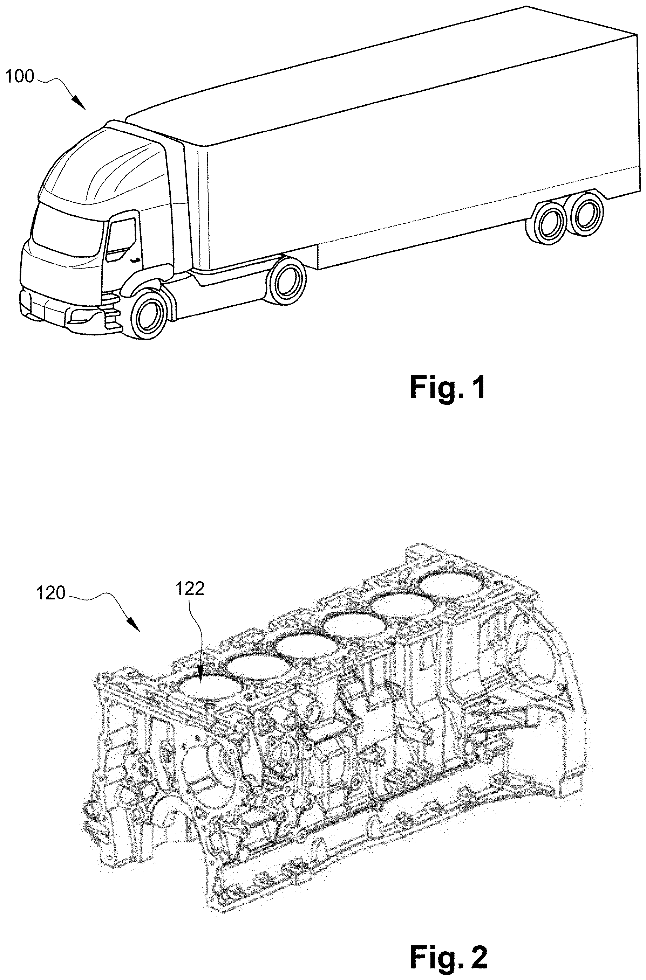

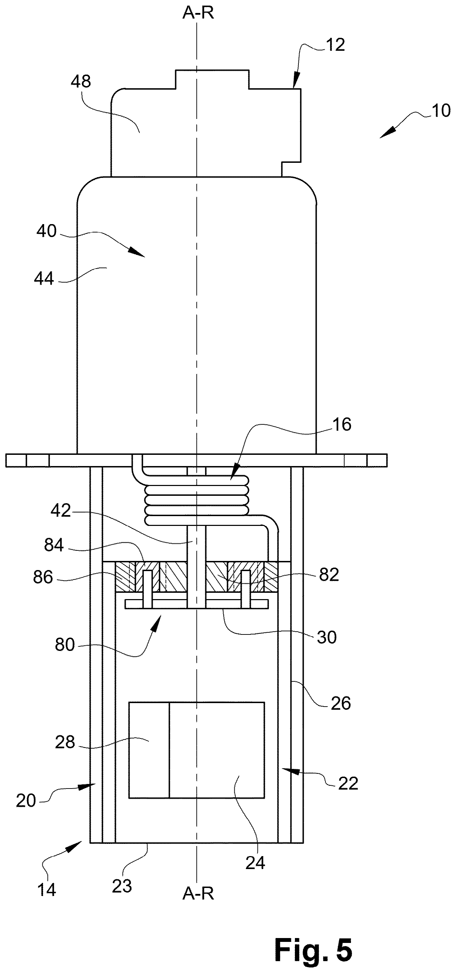

**FIGS. 1** **and** **5** show a valve system 10 configured for use on a vehicle 100. Referring to **FIG. 1**, is contemplated that the vehicle 100 may be a heavy-duty vehicle, such as a truck, bus, and/or construction equipment. However, it should be understood that the valve system 10 may be configured for use on other types of vehicles. It is contemplated that the valve system 10 may be configured for use on an internal combustion engine vehicle, a battery electric vehicle, a fuel cell electric vehicle, and/or a hybrid thereof. However, reference to an internal combustion engine vehicle will be used herein, unless reference to a battery electric vehicle, a fuel cell electric vehicle, and/or a hybrid thereof is otherwise necessary.

As shown in **FIGS. 1-3**, the vehicle to which the valve system 10 is configured for use on may include an engine (not shown). In examples, the engine may be an internal combustion engine. Referring to **FIGS. 2-3**, the engine may include an engine block 120 defining one or more cylinder 122 configured for reciprocation of a piston 124. It is contemplated that the cylinder 122 and the piston 124 are configured to form a combustion chamber 126. In examples, the engine block 120 may be constructed of a metal material, such as iron alloy, aluminum alloy, and/or the like. As such, relative motion between components of the engine block 120, such as reciprocation of the piston 124 within the cylinder 122, may cause friction resulting in an increased temperature and/or wear of the piston 124 and the cylinder 122.

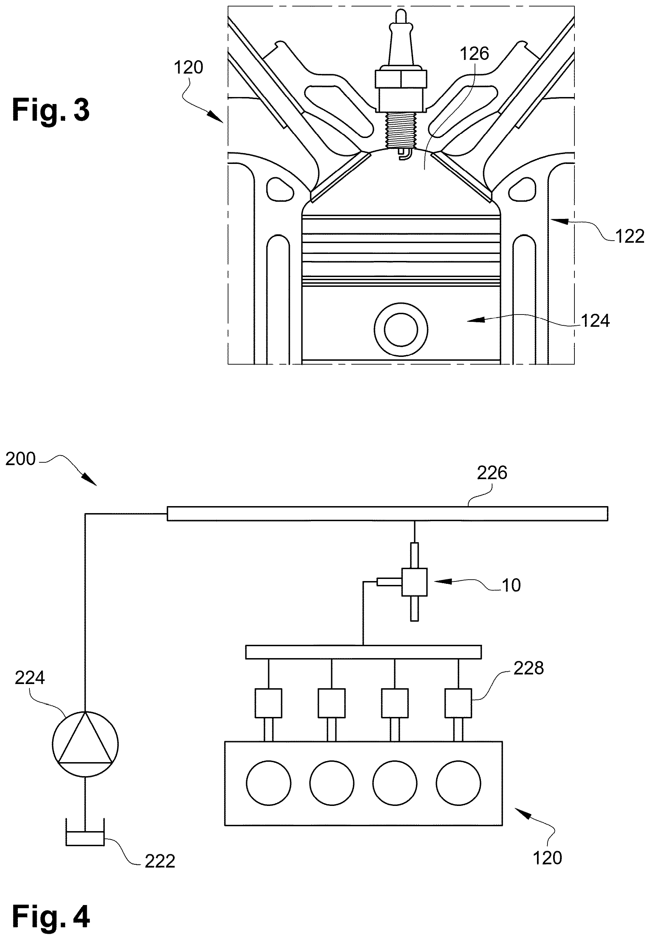

Referring to **FIG. 4**, the engine and, thus, the vehicle 100 to which the valve system 10 is configured for use on, may include a lubrication system 200 configured to remove heat and reduce friction within the engine block 120. In particular, the lubrication system 200 is configured to remove heat and reduce friction corresponding to reciprocation of the piston 124 within the cylinder 122. The lubrication system 200 may include a reservoir 222 configured to store a supply of a fluid (not shown). The fluid may be configured to lubricate and/or absorb heat from one or more of the piston 124 and the cylinder 122. In examples, the fluid may be a lubricant, such as oil. The lubrication system 200 may include a fluid pump 224 configured to draw the fluid from the reservoir 222 to circulate the fluid through the lubrication system 200. The lubrication system 200 may include a fluid gallery 226 configured to receive the fluid drawn from the reservoir 222 by the pump 224 to distribute the fluid within the lubrication system 200 for application to the piston 124. The lubrication system 200 may include one or more injection member 228 (may also be referred to hereafter as a "piston cooling jet 228" or a "PCJ 228") configured to receive a flow of the fluid and to apply a jet and/or stream of the fluid toward and/or to the piston 124. In examples, the injection member 228 may be configured to apply the jet and/or stream of the fluid toward and/or to an underside of the piston 124. In this manner, the lubrication system 200 is configured to lubricate and absorb heat from the piston 124 and the cylinder 122.

Referring to **FIGS. 5-8**, the valve system 10 is configured to regulate a flow of the fluid from a supply of the fluid, such as the reservoir 222, to the piston 124. In particular, the valve system 10 is configured to regulate a flow of the fluid between the fluid gallery 226 and the injection member 228. In examples, the valve system 10 is configured to be in communication with the fluid gallery 226 and the injection member 228. In examples, the valve system 10 may be configured to be positioned between the fluid gallery 226 and the injection member 228. The valve system 10 is arranged and/or is configured to operate along an axis of rotation A-R. In examples, the valve system 10 extends between a first end 12 and a second end 14 along the axis of rotation A-R.

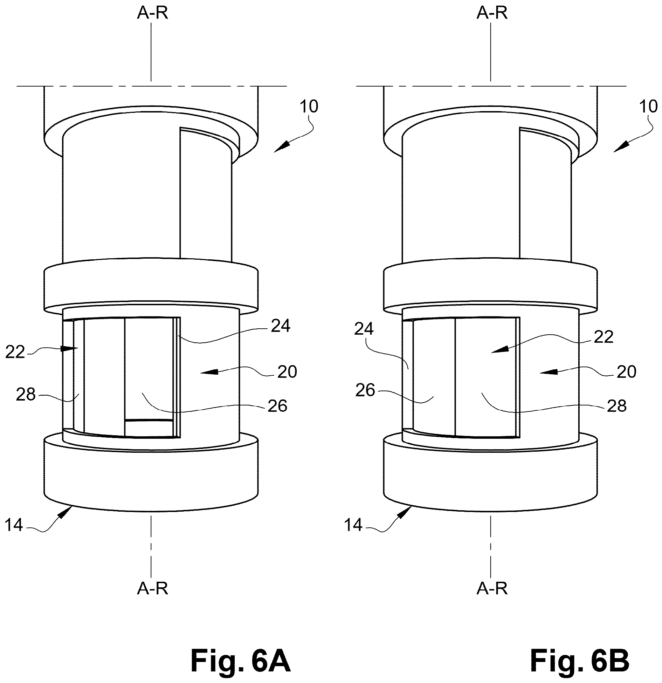

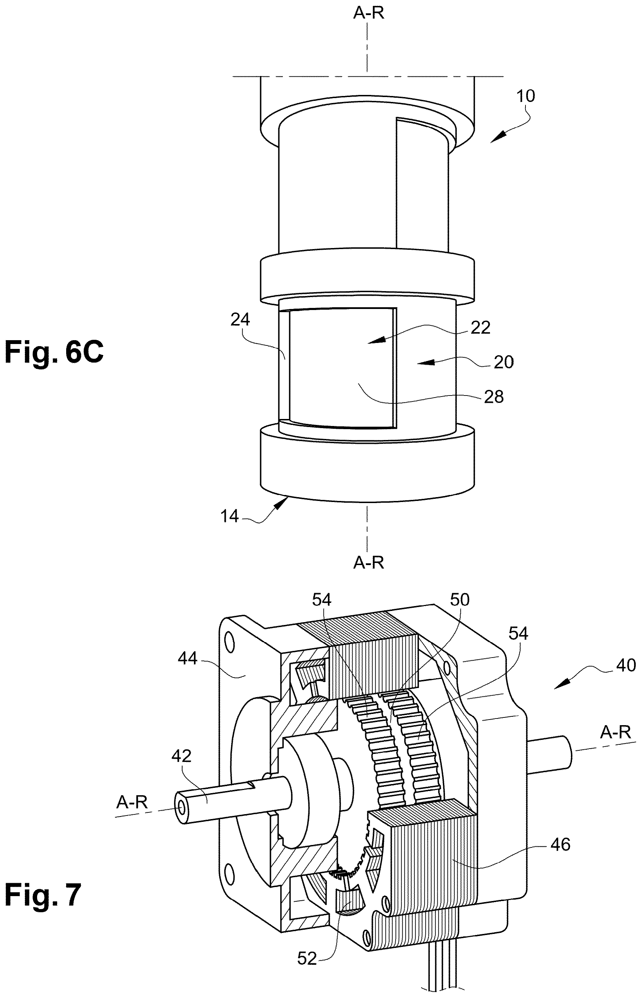

As illustrated by **FIGS. 5-6C**, the valve system 10 is configured to regulate a flow of the fluid within the lubrication system 200. Accordingly, the valve system 10 may be configured to be transitioned between a fully-open state (see **FIG. 6A**), a partially-open state (see **FIG. 6B**), and a closed state (see **FIG. 6C**). In the fully-open state, the valve system 10 is configured to distribute a full flow of the fluid. In the partially-open state, the valve system 10 is configured to distribute a partial flow of the fluid. It is contemplated that an extent of the partially-open state may be variable and/or correspond to any state of the valve system 10 between the fully-open state and the closed state. In the closed state, the valve system 10 is configured to block and/or restrict a flow of the fluid. In examples, the valve system 10 may be configured to be biased toward the fully-open state. As such, the valve system 10 may include a bias member 16 configured to bias the valve system 10 toward the fully-open state. It is contemplated that the bias member 16 functions as a fail-safe to prevent a mechanical failure resulting from a lack of a flow of the fluid due to the valve system 10 remaining in the closed state.

As shown by **FIGS. 5-6C**, the valve system 10 includes a first valve body 20 and a second valve body 22 extending between the first end 12 and the second end 14 of the valve system 10 along the axis of rotation A-R of the valve system 10. In examples, the first valve body 20 and the second valve body 22 may be substantially cylindrical. Accordingly, the first valve body 20 and the second valve body 22 may be referred to herein and/or considered as being configured to form a "barrel" and the valve system 10 may be referred to herein and/or considered to be a "barrel valve system 10."

In examples, the first valve body 20 is configured to receive the second valve body 22. Additionally or alternatively, the first valve body 20 is arranged radially-outward of the second valve body 22, such that the second valve body 22 is received within the first valve body 20. Accordingly, the first valve body 20 may be referred to herein and/or considered to be an "outer valve body 20" and the second valve body 22 may be referred to herein and/or considered to be an "inner valve body 22." It is contemplated that the terms "outer," "outwardly," "inward," and "inwardly" may be understood in relation to the axis of rotation A-R, such that the terms "outward" and "outwardly" correspond to a direction away from the axis of rotation A-R and the terms "inward" and "inwardly" correspond to a direction toward the axis of rotation A-R. The first valve body 20 is configured to be stationary and the second valve body 22 is configured to rotate within the first valve body 20 about the axis of rotation A-R. In this manner, the first valve body 20 and the second valve body 22 are configured to transition the valve system 10 between the fully-open state, the partially-open state, and the closed-state.

The first valve body 20 defines an inlet 23 configured to receive a flow of the fluid and an outlet 24 configured to distribute a flow of the fluid. In examples, the inlet 23 and the outlet 24 may be defined at and/or adjacent to the second end 14 of the valve system 10. In particular, in examples, the inlet 23 may be defined at the second end 14 of the valve system 10 and the outlet 24 may be defined adjacent to the second end 14 of the valve system 10. Additionally or alternatively, the inlet 23 may be configured to receive the fluid axially and the outlet 24 may be configured to distribute the fluid radially. It is contemplated that the inlet may be in communication with and/or connected to the fluid gallery 226 and the outlet 24 may be in communication with and/or connected to the injection member 228. The first valve body 20 defines a chamber 26 extending between the first end 12 and the second end 14 of the valve system 10. The chamber 26 is configured to receive the second valve body 22. The chamber 26 may be configured for a flow of the fluid between the inlet and the outlet 24.

The second valve body 22 is configured to be received within the chamber 26 of the first valve body 20. The second valve body 22 includes a wall 28 configured to be in surface-to-surface engagement with at least a portion of the first valve body 20. In examples, a width of the wall is greater than or equal to a width of the outlet 24. In this manner, the wall 28 is capable of fully-obstructing the outlet 24. In examples, the second valve body 22 may be configured to be rotated between at least a first position, a second position, and a third position. Referring to **FIG. 5**, the second valve body 22 may include a rotary element 30 (may also be referred to herein as a "spindle") included between the first end 12 and the second end 14 of the valve system 10 along the axis of rotation A-R. The rotary element 30 is configured to receive a rotational force (may also be referred to herein as "torque") and to apply the rotational force to the second valve body 22 to rotate the second valve body 22. The rotary element 30 may be connected to and/or formed integrally with the wall 28 of the second valve body 22. Additionally or alternatively, the rotary element 30 may extend from the wall 28 of the second valve body 22.

Referring to **FIG. 6A**, in the first position of the second valve body 22, the wall 28 is fully unaligned with and/or fully uncovers the outlet 24, such that the outlet 24 is fully unobstructed by the wall 28, and the fluid is distributed by the valve system 10 through the outlet 24. It is contemplated that the term "fully" as used herein may also be referred to herein and/or understood herein as "entirely." Additionally or alternatively, in the first position, the valve system 10 is in the fully-open state. In the second position of the second valve body 22, the wall 28 is fully aligned with and/or fully covers the outlet 24, such that the outlet 24 is fully obstructed by the wall 28, and the fluid is restricted and/or blocked from being distributed by the valve system 10 through the outlet 24. Additionally or alternatively, in the second position, the valve system 10 is in the closed state. In the third position of the second valve body 22, the wall 28 is at least partially aligned with and/or partially covers the outlet 24, such that the outlet 24 is at least partially obstructed by the wall 28, and the fluid is at least partially distributed by the valve system 10 through the outlet 24. Additionally or alternatively, in the third position, the valve system 10 is in the partially-open state. It is contemplated that an extent of the third position may be variable and/or correspond to any position of the wall 28 between the first position and the second position of the wall 28.

Referring to **FIGS. 5** **and** **6A**, the second valve body 22 may be biased toward the first position. In particular, the second valve body 22 may be biased toward the first position by a bias member 16. The bias member 16 may be received within the first valve body 20. Additionally and/or alternatively, the bias member 16 may be received within the second valve body 22. In examples, the bias member 16 may be coupled to the second valve body 22 and one or more of the first valve body 20 and a stationary housing 44 of a motor 40 configured to rotate the second valve body 22. Rotational force imparted on the rotary element 30 and, thus, the second valve body 22, causes rotation of the second valve body 22 from the first position or the third position toward the second position and increased torsion and/or compression on the bias member 16. Removal of rotational force imparted on the rotary element 30 and, thus, the second valve body 22, causes decreased torsion and/or compression and, thus, expansion of the bias member 16, which returns the second valve body 22 from the second position or the third position toward the first position.

As shown by **FIGS. 5** **and** **7**, the valve system 10 includes a motor 40 configured to convert electrical energy into mechanical energy. In particular, the motor 40 is configured to convert electrical energy into rotation. The motor 40 is configured to rotate the valve system 10 between the fully-open state, the partially-open state, and the closed state. In particular, the motor 40 may be configured to rotate the rotary element 30 and, thus, the second valve body 22 between the first position, the second position, and the third position. In examples, the motor 40 may be configured for rotation in a series of angular steps allowing for precision control of rotation. Accordingly, the motor 40 may be understood as and/or referred to as a "stepper motor 40." In examples, the motor 40 may be configured for an angle of each step of rotation of the motor 40 to be within a range of 1° and 60°. Additionally or alternatively, the motor 40 may be configured to include between 6 and 400 steps per full rotation. Additionally or alternatively, the motor 40 may be configured for continuous rotation. In this manner, the motor 40 and, thus the valve system 10, is configured for precision rotation of the second valve body 22 and, thus, precision control of the valve system 10.

Referring to **FIG. 7**, the motor 40 may include a shaft 42 extending from a housing 44, between the first end 12 and the second end 14 of the valve system 10, along the axis of rotation A-R. It is contemplated that the motor 40 may be included and/or extend from a position at and/or adjacent to the first end 12 of the valve system 10 along the axis of rotation A-R and the first valve body 20 and the second valve body 40 may be included and/or extend from a position at and/or adjacent to the second end 14 of the valve system 10 along the axis of rotation A-R. Additionally or alternatively, it is contemplated that at least a portion of the housing 44 of the motor 40 may be coupled to at least a portion of the first valve body 20. The motor 40 is configured to rotate the shaft 42 in the series of steps. The motor 40 may be configured to rotate the shaft 42 in a first direction and a second direction opposite the first direction. In examples, the shaft 42 may be configured to engage the rotary element 30 of the second valve body 22 to rotate the rotary element 30 and, thus, the second valve body 22.

The motor 40 includes a stator 46 supported within the housing 44. The stator 46 is configured to receive a plurality of pulses of electric current transmitted by an electric power source (not shown) to generate an electromagnetic field. Accordingly, the motor 40 may include an electrical connector 48 configured to receive the plurality of pulses of electric current from the electric power source. It is contemplated that each step of the series of steps of rotation corresponds to a pulse of the plurality of pulses of electric current. Additionally or alternatively, each pulse of the plurality of pulses corresponds to a step of the series of steps of rotation. Accordingly, the stator 46 and/or the motor 40 may be configured to receive between 6 and 400 pulses per full rotation.

In examples, the stator 46 may include one or more of a field magnet 50 and a plurality of conductors 52 configured to receive the pulses of electric current to generate the electromagnetic field. It is contemplated that the term "field magnet" as used herein may be understood to be a permanent magnet, an electromagnet, and/or the like. The motor 40 includes one or more rotor 54 surrounded by the stator 46. The rotor 54 may be supported on and/or coupled to the shaft 42. The rotor 54 is configured to rotate with respect to the stator 46 about the axis of rotation A-R to transfer mechanical energy and/or rotational force to the shaft 42. The rotor 54 is configured to generate a magnetic field to interact with the electromagnetic field generated by the stator 46. Additionally or alternatively, the rotor 54 may include a field magnet 50 configured to generate the magnetic field. Additionally or alternatively, the rotor 54 may be referred to and/or considered to be in the form of a field magnet configured to generate the magnetic field. Interaction between the electromagnetic field generated by the stator 46 and the magnetic field generated by the rotor 54 cause the rotor 54 and the shaft 42 and, thus, the rotary element 30 and the second valve body 22, to rotate.

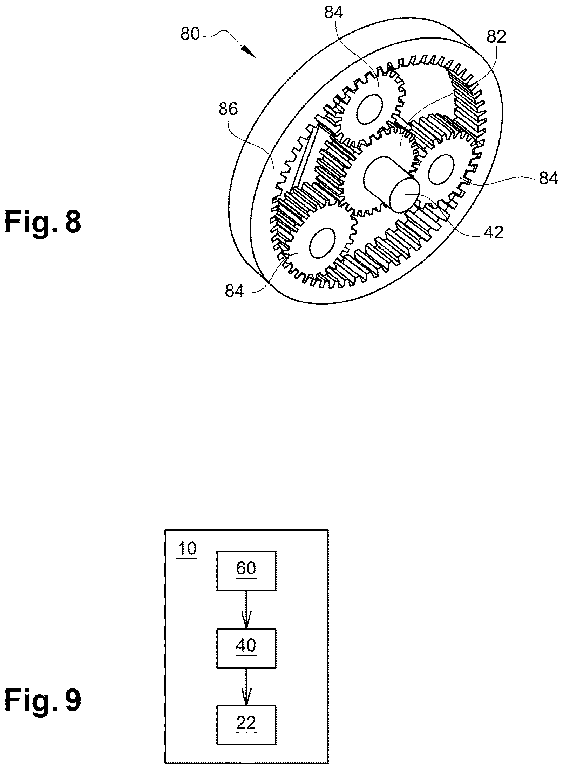

Referring to **FIG. 9**, it is contemplated that the valve system 10 includes an electronic control unit 60 (hereafter, "the control unit 60" and/or "the ECU 60") configured to operate the valve system 10. Additionally or alternatively, the control unit 60 may be part of and/or configured for operation of one or more of the vehicle 100 and the lubrication system 200. In examples, the control unit 60 may be configured to operate the valve system 10 by transmitting signals to transition the valve system 10 between the fully-open state, the partially-open state, and the closed state. In examples, the control unit 60 may be configured to operate the valve system 10 by operating the motor 40. In particular, the control unit 60 may be configured to operate and/or prompt the electric power source to transmit the plurality of pulses of electric current to the stator 46 of the motor 40 to trigger rotation of the rotor 54 and the shaft 42 and, thus, the rotary element 30 and the second valve body 22. The control unit 60 may be configured to operate the valve system 10 in response to operational data received from one or more of the valve system 10 and/or one or more sensor (not shown) included by the vehicle 100. Additionally or alternatively, the sensor may be considered part of and/or configured to function with the valve system 10. It is contemplated that the sensor may be configured to detect a temperature of one or more of the piston 124, the combustion chamber 126, and the engine block 120. Additionally or alternatively, the sensor may be configured to detect a pressure within the fluid gallery 226. Additionally or alternatively, is contemplated that the control unit 60 may utilize historical data, an algorithm, and/or machine learning to operate the valve system 10.

Referring to **FIGS. 5** **and** **8**, the valve system 10 may include a gear train 80 configured to rotate the rotary element 30 and, thus, the second valve body 22. The gear train 80 may include a central gear 82 (may also be referred to herein as a "sun gear 82") configured to be rotated about the axis of rotation A-R, a plurality of peripheral gears 84 (may also be referred to herein as a "planetary gear 84") configured to mesh with the central gear 82 and to be rotated and/or to revolve about the central gear 82, and an outer ring gear 86 (may also be referred to herein as a "moon gear 86") configured to mesh with the peripheral gears 84, such that the peripheral gears 84 are oriented between the central gear 82 and the outer ring gear 86 and transfer rotational force from the central gear 82 to the outer ring gear 86. In examples, the gear train 80 may include between two and four peripheral gears 84. The central gear 82 may be supported on and/or coupled to the shaft 42, thereby being configured to receive mechanical energy and/or rotational force imparted by rotation of the shaft 42 and, thus, the rotor 54. The outer ring gear 86 may be supported on and/or be coupled to the rotary element 30, thereby imparting mechanical energy and/or rotational force on the rotary element 30 and, thus, the second valve body 22. In this manner, by including the gear train 80, the valve system 10 is configured for precision adjustment and increased power density.

In operation, the control unit 60 may send a signal to one or more of the motor 40 and the electric power source to transmit the plurality of pulses of electric current to the stator 46 of the motor 40. It is contemplated that the control unit 60 may send the signal in response to one or more of a detection of a temperature, pressure, and routine maintenance performed within the lubrication system 200. The rotor 54 and, thus, the shaft 42, are rotated in the first direction to an extent based upon the steps corresponding to the plurality of pulses of electric current. In examples, rotation of the shaft 42 may initiate rotation the gear train 80 and/or the rotary element 30 in the first direction. Rotation of the rotary element 30 in the first direction rotates the second valve body 22 in the first direction, thereby compressing the bias member 16 and transitioning the second valve body 22 from the first position toward the second position, from the first position toward the third position, and/or to adjust the extent the third position. In this manner, the valve system 10 is transitioned from the fully-open state toward the closed state, from the fully-open state toward the partially-open state, and/or to adjust the extent of the partially-open state. Removal of rotational force imparted on the rotary element 30 causes expansion of the bias member 16 and return of the second valve body 22 from the second position toward the first position and, thus, the valve system 10 from the closed state toward the fully-open state, from the closed state toward the partially-open state, and/or to adjust the extent of the partially-open state.

Additionally or alternatively, it is contemplated that the control unit 60 may send an alternative signal for the rotor 54 and, thus, the shaft 42, to be rotated in the second direction to initiate rotation of the gear train 80 and/or the rotary element 30 in the second direction. Rotation of the rotary element 30 in the second direction rotates the second valve body 22 in the second direction, thereby expanding the bias member 16 and transitioning the second valve body 22 from the second position toward the first position, from the second position toward the third position, and/or to adjust the extent the third position. In this manner, the valve system 10 is transitioned from the closed state toward the fully-open state, from the closed state toward the partially-open state, and/or to adjust the extent of the partially-open state.

In this manner, the valve system 10 is capable of increased valve control, accuracy, and strength to thereby enhance mechanical efficiency and prevent mechanical failure of the piston 124.

According to examples of the valve system 10, the valve system 10 may be provided as follows:
Example 1: A valve system 10 configured for use in a lubrication system 200 of a vehicle 100, the valve system 10 including: a first valve body 20 defining an outlet 24 configured to distribute a fluid; a second valve body 22 configured to be received within the first valve body 20 and to be transitioned between at least a first position corresponding to a fully-open state of the valve system 10 and a second position corresponding to a closed state of the valve system 10; a motor 40 configured to transition the second valve body 22 between the first position and the second position by rotating a shaft 42 about an axis of rotation A-R in a series of angular steps; and a control unit 60 configured to operate the motor 40 to transition the second valve body 22 between the first position and the second position.
Example 2: The valve system 10 according to Example 1, wherein the control unit 60 is configured to prompt a plurality of pulses of electric current to be transmitted to the motor 40 by an electric power source.
Example 3: The valve system 10 according to Example 2, wherein each step in the series of steps of the motor 40 corresponds to a pulse of the plurality of pulses transmitted to the motor 40 by the electric power source.
Example 4: The valve system 10 according to any of Examples 1-3, wherein the motor 40 is configured to include between 6 and 400 steps per full rotation of the shaft 42.
Example 5: The valve system 10 according to any of Examples 1-4, wherein the motor 40 includes a stator 46 and a rotor 54 surrounded by the stator.
Example 6: The valve system 10 according to any of Examples 1-5, comprising a gear train 80 configured to receive rotational force imparted by the shaft 42 and to impart rotational force on the second valve body 22 to transition the second valve body 22 between the first position and the second position.
Example 7: The valve system 10 according to Example 6, wherein the gear train 80 includes a central gear 82 configured to be rotated by the shaft 42, a plurality of peripheral gears 84 configured to mesh with the central gear 82 and to revolve about the central gear 82, and an outer ring gear 86 configured to mesh with the plurality of peripheral gears 84 about the central gear 82.
Example 8: The valve system 10 according to Example 7, wherein the outer ring gear 86 is coupled to at least a portion of the second valve body 22.
Example 9: The valve system 10 according to any of Examples 1-8, comprising a bias member 16 configured to bias the second valve body 22 toward the first position.
Example 10: A lubrication system 200 configured for use on a vehicle 100, the lubrication system 200 comprising: a reservoir 222 configured to store a supply of a fluid; an injection member 228 configured to receive the fluid and to apply the fluid toward a piston 124 of an engine of a vehicle 100; and the valve system 10 according to any of Examples 1-9.
Example 11: The lubrication system 200 according to Example 10, wherein the valve system 10 is configured to control a flow of the fluid between the reservoir 222 and the injection member 228.
Example 12: The lubrication system 200 according to any of Examples 10-11, wherein the injection member 228 is capable of applying the fluid toward the piston 124 when the valve system 10 is in the fully-open state and the injection member 228 is no longer capable of applying the fluid toward the piston 124 when the valve system 10 is in the closed state.
Example 13: The lubrication system 200 according to any of Examples 10-12, wherein the control unit 60 is configured to prompt an electric power source to transmit a plurality of pulses of electric current to the motor 40.
Example 14: The lubrication system 200 according to Example 13, wherein each pulse of the plurality of pulses corresponds to a step of the series of steps of the motor 40.
Example 15: A method of controlling a flow of a fluid in a lubrication system 200 of a vehicle 100, the method comprising: providing the valve system 10 according to any of Examples 1-9; and rotating the shaft 42 of the motor 40 about the axis of rotation A-R in the series of angular steps to transition the second valve body 22 between the first position and the second position.
Example 16: The method according to Example 15, wherein rotating the shaft 42 includes between 6 and 400 steps per full rotation of the shaft 42.
Example 17: The method according to any of Examples 15-16, comprising transmitting a plurality of pulses of electric current to the motor 40.
Example 18: The method according to any of Examples 15-17, comprising imparting rotational force on a gear train 80 to transition the second valve body 22 between the first position and the second position.
Example 19: The method according to Example 18, wherein imparting rotational force on the gear train 80 includes rotating a central gear 82 with the shaft 42, meshing a plurality of peripheral gears 84 with the central gear 82, and meshing an outer ring gear 86 with the plurality of peripheral gears 84 about the central gear 82.
Example 20: The method according to any of Examples 15-19, comprising compressing a bias member 16 to transition the second valve body 22 between the first position and the second position.
Example 21: A vehicle 100 including the valve system 10 according to any of Examples 1-9.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

Additionally, all of the disclosed features of an apparatus may be transposed, alone or in combination, to a method and vice versa.

## Claims

1. A valve system (10) configured for use in a lubrication system (200) of a vehicle (100), the valve system comprising:
a first valve body (20) defining an outlet (24) configured to distribute a fluid;
a second valve body (22) configured to be received within the first valve body and to be transitioned between at least a first position corresponding to a fully-open state of the valve system and a second position corresponding to a closed state of the valve system;
a motor (40) configured to transition the second valve body between the first position and the second position by rotating a shaft (42) about an axis of rotation (A-R) in a series of angular steps; and
a control unit (60) configured to operate the motor to transition the second valve body between the first position and the second position.

2. The valve system (10) according to claim 1, wherein the control unit (60) is configured to prompt a plurality of pulses of electric current to be transmitted to the motor (40) by an electric power source.

3. The valve system (10) according to claim 2, wherein each step in the series of steps of the motor (40) corresponds to a pulse of the plurality of pulses transmitted to the motor by the electric power source.

4. The valve system (10) according to any of claims 1-3, wherein the motor (40) is configured to include between 6 and 400 steps per full rotation of the shaft (42).

5. The valve system (10) according to any of claims 1-4, comprising a gear train (80) configured to receive rotational force imparted by the shaft (42) and to impart rotational force on the second valve body (22) to transition the second valve body between the first position and the second position.

6. The valve system (10) according to claim 5, wherein the gear train (80) includes a central gear (82) configured to be rotated by the shaft (42), a plurality of peripheral gears (84) configured to mesh with the central gear and to revolve about the central gear, and an outer ring gear (86) configured to mesh with the plurality of peripheral gears about the central gear.

7. The valve system (10) according to claim 6, wherein the outer ring gear (86) is coupled to at least a portion of the second valve body (22).

8. The valve system (10) according to any of claims 1-7, comprising a bias member (16) configured to bias the second valve body (22) toward the first position.

9. A lubrication system (200) configured for use on a vehicle (100), the lubrication system comprising:
a reservoir (222) configured to store a supply of a fluid;
an injection member (228) configured to receive the fluid and to apply the fluid toward a piston (124) of an engine of a vehicle (100); and
the valve system (10) according to any of claims 1-8.

10. The lubrication system (200) according to claim 9, wherein the valve system (10) is configured to control a flow of the fluid between the reservoir (222) and the injection member (228).

11. The lubrication system (200) according to any of claims 9-10, wherein the injection member (228) is capable of applying the fluid toward the piston (124) when the valve system (10) is in the fully-open state and the injection member is no longer capable of applying the fluid toward the piston when the valve system is in the closed state.

12. A method of controlling a flow of a fluid in a lubrication system (200) of a vehicle (100), the method comprising:
providing the valve system (10) according to any of claims 1-8; and
rotating the shaft (42) of the motor (40) about the axis of rotation (A-R) in the series of angular steps to transition the second valve body (22) between the first position and the second position.

13. The method according to claim 12, comprising imparting rotational force on a gear train (80) to transition the second valve body (22) between the first position and the second position.

14. The method according to claim 13, wherein imparting rotational force on the gear train (80) includes rotating a central gear (82) with the shaft (42), meshing a plurality of peripheral gears (84) with the central gear, and meshing an outer ring gear (86) with the plurality of peripheral gears about the central gear.

15. A vehicle (100) comprising the valve system (100) according to any of claims 1-8.
